(19) Europäisches Patentamt European Patent Office Office européen des brevets

(11) **EP 3 905 495 A1**

(12) **EUROPEAN PATENT APPLICATION**

(43) Date of publication:
**03.11.2021 Bulletin 2021/44**

(51) Int Cl.:
*H02M 1/00* (2006.01)   *H02M 1/42* (2007.01)

(21) Application number: **21170701.3**

(22) Date of filing: **27.04.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2020 IN 202041017949**

(71) Applicant: **Hamilton Sundstrand Corporation
Charlotte, NC 28217-4578 (US)**

(72) Inventors:
• **KUMAR, Dhananjay
560076 Bangalore (IN)**
• **SHARMA, Krishan Kant
281403 Kosi Kalan (IN)**

(74) Representative: **Dehns
St. Bride's House
10 Salisbury Square
London EC4Y 8JD (GB)**

(54) **CASCADED CONVERTER CIRCUIT CONTROL**

(57)   A cascaded converter system can include a first boost circuit (101) configured to output a first voltage that is higher than an input voltage, and a second boost circuit (103) configured to output a second voltage that is higher than the first voltage. The system can include an intermediate capacitor (105) disposed in parallel between the first boost circuit and the second boost circuit. The system can include a controller (107) configured to control the first and second boost circuit to reduce an RMS current to the intermediate capacitor and/or an area under an intermediate capacitor current plot.

100

**Fig. 1**

## Description

### FIELD

This disclosure relates to cascaded converter circuit control, e.g., for cascaded boost converters.

### BACKGROUND

Certain systems, e.g., electric motor propulsion/generator systems include cascaded DC to DC converters that have an intermediate capacitor between cascaded converters. The size of the intermediate capacitor is large to decouple two cascaded converters. The intermediate capacitor will store energy in one half cycle and discharge in other half cycle. In traditional systems, the intermediate capacitor stores more energy during period than it discharges. For storing more, a larger capacitor is needed.

Such conventional methods and systems have generally been considered satisfactory for their intended purpose. However, there is still a need in the art for improved cascade converter circuit control (e.g., for reducing intermediate capacitor size). The present disclosure provides a solution for this need.

### SUMMARY

A cascaded converter system can include a first boost circuit configured to output a first voltage that is higher than an input voltage, and a second boost circuit configured to output a second voltage that is higher than the first voltage. The system can include an intermediate capacitor disposed in parallel between the first boost circuit and the second boost circuit. The system can include a controller configured to control the first and second boost circuit to reduce an RMS current to the intermediate capacitor and/or an area under an intermediate capacitor current plot.

The first boost circuit can include a first switch operatively connected to the controller to be controlled by the controller. The second boost circuit can include a second switch operatively connected to the controller to be controlled by the controller.

The controller can be configured to operate the first switch and the second switch with a time delay relative to each other such that the first and second switches are operated off-phase from each other. For example, the controller can be configured to operate the first switch and the second switch off-phase such that the time delay is more than about 0% and less than about 100% of duty cycle. In certain embodiments, the controller can be configured to operate the first switch and the second switch off-phase such that the time delay is between about 20% and about 80% of duty cycle. In certain embodiments, the time delay can be about 50% of duty cycle.

The controller can be configured to control a first duty cycle of the first boost circuit to be the same as a second duty cycle of the second boost circuit. In certain embodiments, the RMS current to the intermediate capacitor can be reduced by more than about 0% to about 16%. In certain embodiments, the RMS current to the intermediate capacitor is reduced by about 15%.

In accordance with at least one aspect of this disclosure, a controller for a cascaded converter can be configured to control a first boost circuit and a second boost circuit of the cascaded converter to reduce an RMS current to an intermediate capacitor of the cascaded converter and/or an area under an intermediate capacitor current plot. The controller can be configured to operate a first switch of the cascaded converter and a second switch of the cascaded converter with a time delay relative to each other such that the first and second switches are operated off-phase from each other. The controller can be any suitable controller disclosed herein, e.g., as described above.

In accordance with at least one aspect of this disclosure, a method can include reducing an RMS current to an intermediate capacitor of a cascaded converter using by controlling a plurality of switches with a time delay relative to each other. In certain embodiments, the time delay can be about 50% of duty cycle, and each switch can include the same duty cycle. Reducing the RMS current can include reducing a minimum required size of the intermediate capacitor.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

> Fig. 1 is a block diagram of an embodiment of a cascaded converter system in accordance with this disclosure;
> Fig. 2 is a circuit diagram of an embodiment of a cascaded circuit system in accordance with this disclosure;
> Fig. 3 is a current chart of various components of the embodiment of Fig. 2;
> Fig. 4 is a comparison chart comparing current to an intermediate capacitor in a traditional system vs. the embodiment of Fig. 3;
> Fig. 5 is a plot of current in an intermediate capacitor of the embodiment of Fig. 3; showing an embodiment of an RMS current value;
> Fig. 6 is a plot of current in an intermediate capacitor of a traditional system, showing an RMS current value;

Fig. 7 is a plot showing a percentage decrease in RMS current to the intermediate capacitor as a function of time delay (percent of duty cycle) in accordance with this disclosure.

## DETAILED DESCRIPTION

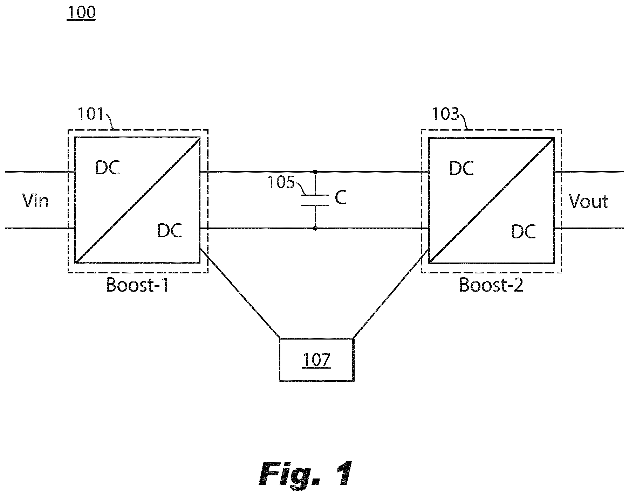

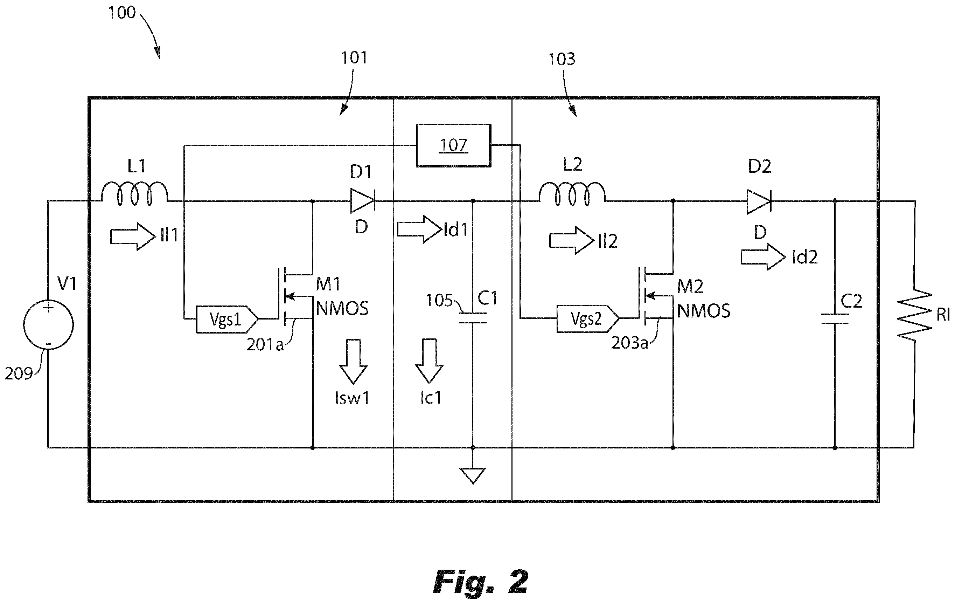

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-7. Certain embodiments described herein can be used to reduce an intermediate capacitor size and reduce a weight and/or cost while increasing efficiency and reliability of a cascaded converter system. Any other suitable use is contemplated herein.

Referring to Figs. 1 and 2, a cascaded converter system 100 can include a first boost circuit 101 configured to output a first voltage that is higher than an input voltage (e.g., VI from a voltage source 209 as shown in Fig. 2, e.g., a battery). The system 100 can include a second boost circuit 103 configured to output a second voltage that is higher than the first voltage. The system 100 can include an intermediate capacitor 105 disposed in parallel between the first boost circuit 101 and the second boost circuit 103.

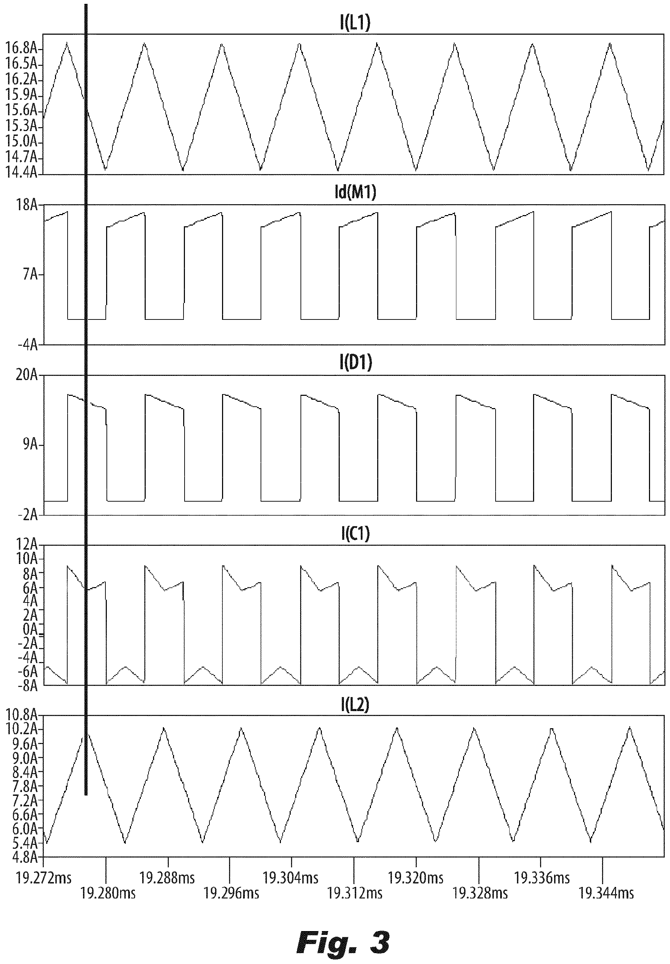

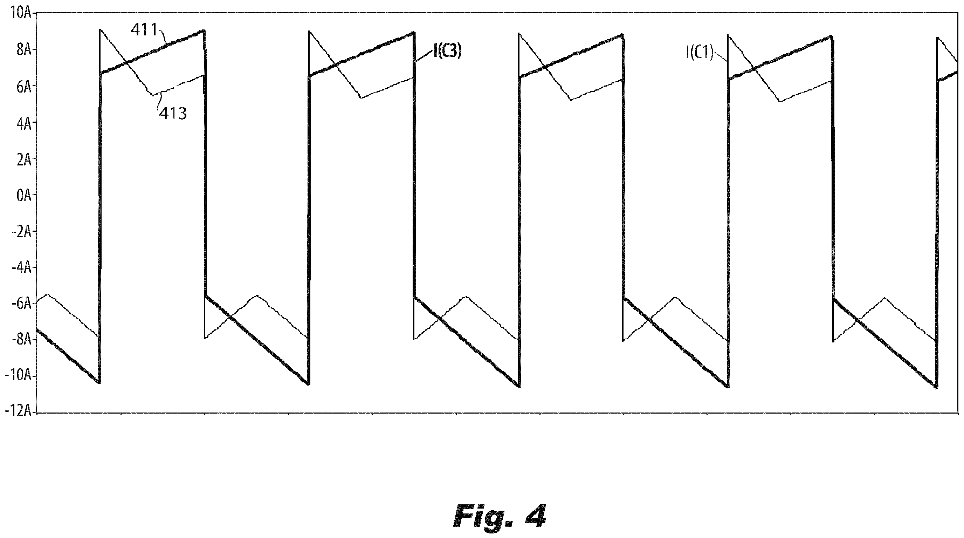

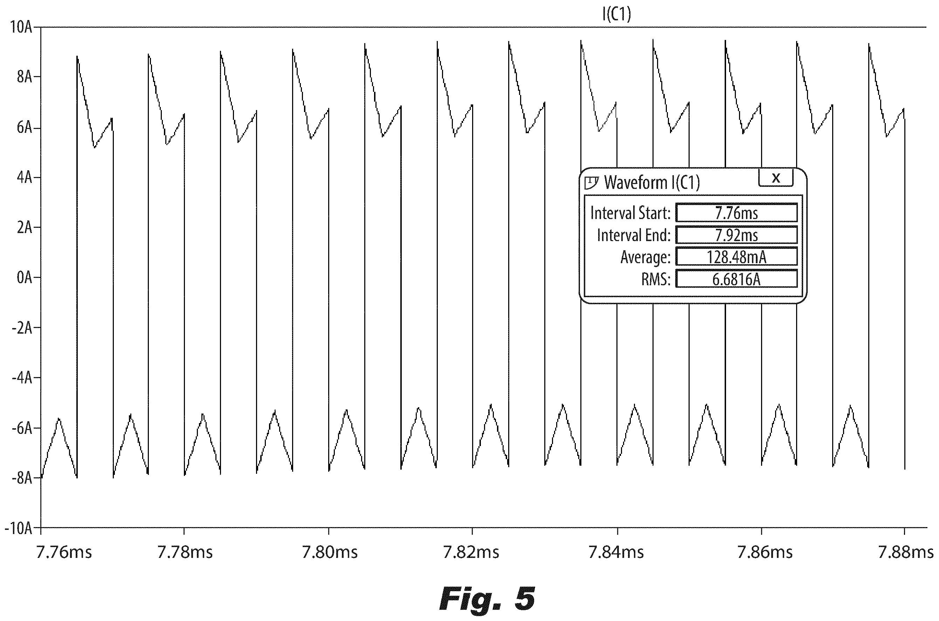

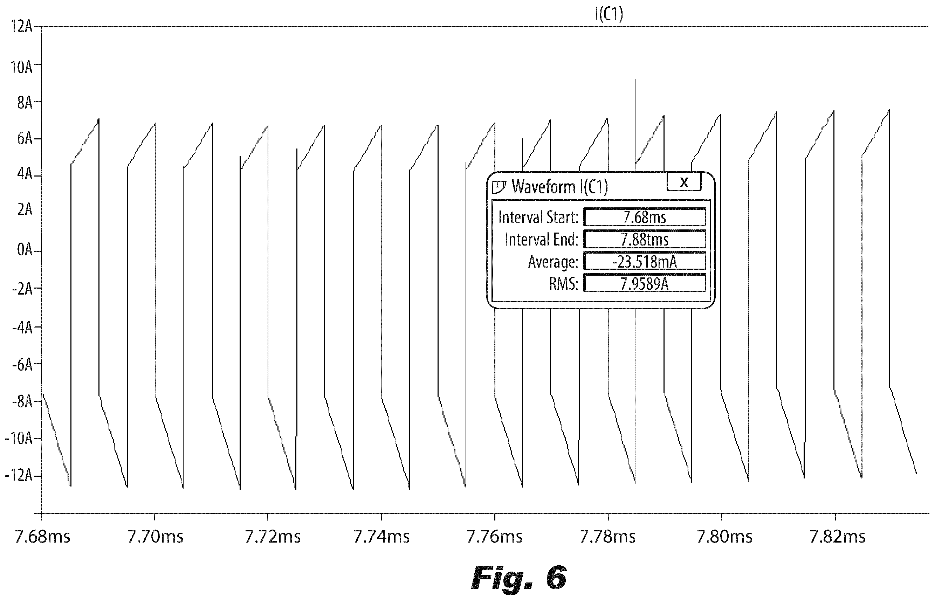

The system 100 can include a controller 107 configured to control the first and second boost circuit 101, 103 (e.g., switching thereof) to reduce an RMS current (e.g., as shown in Figs. 5 and 6) to the intermediate capacitor 105 and/or an area under an intermediate capacitor current plot (e.g., as shown in Figs. 3 and 4). The controller 107 can include any suitable hardware and/or software module(s) configured to perform any suitable function disclosed herein and/or otherwise appreciated by those having ordinary skill in the art.

The first boost circuit 101 can include a first switch 201a operatively connected to the controller 107 to be controlled by the controller 107 (e.g., between an ON/closed state and an OFF/open state). The first switch 201a can be any suitable type of semiconductor controllable switch (e.g., an NMOS) or any other suitable switch. The first boost circuit 101 can include any other suitable circuitry, e.g., for boosting voltage such as a first inductor L1 and a first diode D1

The second boost circuit 103 can include a second switch 203a operatively connected to the controller 107 to be controlled by the controller 107 (e.g., between an ON/closed state and an OFF/open state). The second switch 203a can be any suitable type of semiconductor controllable switch (e.g., an NMOS) or any other suitable switch, and can be the same as the first switch 201a. The second boost circuit 103 can include any other suitable circuitry, e.g., for boosting voltage such as a second inductor L2 and a second diode D2. In certain embodiments, the second boost circuit 103 can include the same construction as the first boost circuit 101 (e.g., with or without the same values for one or more of the inductors, diodes, switches, etc.).

The first boost circuit 101 and the second boost circuit 103 can be configured to operate together to boost voltage to a load R1. One or more additional capacitors (e.g., capacitor C2 for connecting to the load R1 or for further cascading) can be included.

Fig. 3 shows current charts in certain circuit components, wherein intermediate capacitor 105 is listed as C1 as shown in Fig. 2.

Referring additionally to Figs. 3 and 4, the controller 107 can be configured to operate the first switch 201a and the second switch 203a with a time delay relative to each other such that the first and second switches 201a, 203a are operated off-phase from each other. For example, the controller 107 can be configured to operate the first switch 201a and the second switch 203a off-phase such that the time delay is more than about 0% and less than about 100% of duty cycle. In certain embodiments, the controller 107 can be configured to operate the first switch 201a and the second switch 203a off-phase such that the time delay is between about 20% and about 80% of duty cycle.

In certain embodiments, e.g., as shown in Figs. 3 and 4, the time delay can be about 50% of duty cycle. For example, the line in the chart of Fig. 3 shows that a peak current in the second inductor L2 is 50% delayed relative to a peak of the current in the first inductor L1 such that peak current of the second inductor it aligns with a midpoint of a declining current line of the first inductor L1). Fig. 4 is a comparison chart comparing current to an intermediate capacitor in a traditional system (line 411) vs. the embodiment of Fig. 3 (line 413). The area of the line 411 is more than line 413 curve, and hence storing area for C1 is reduced in certain embodiments.

The controller 107 can be configured to control a first duty cycle of the first boost circuit 101 to be the same as a second duty cycle of the second boost circuit 103. For example, the duty cycle of both circuits can be about 50% or any other suitable duty cycle. An embodiment of parameters and values for the system 100 is shown in Table 1 below.

Table 1

| Parameter | Value |
|---|---|
| Switching Frequency | 100kHz |
| Input Voltage | 50V |
| Output Voltage | 200V |
| L1, L2 | 100uH |
| C1, C2 | 20u |
| Duty Ratio (D) | 50% |

(continued)

| Parameter | Value |
|---|---|
| Time Delay | 50% of D |
| Load Current | 4A |

An embodiment of a control scheme of an embodiment of the system 100 is described below. For example, in certain embodiments, assuming a 50% time delay of the second switch 203a duty ratio relative to the first switch 201a:

Case1 : 0≤t≤T/4

In this period, only the first switch 201a will be ON and second switch 203a will be OFF. L1 current will increase from Imin to Imax while L2 will provide energy to the load (load current is constant). I(L2) will decrease in this period.
Ic1=-I(L2).

Case2: T/4≤t≤T/2

The first switch 201a and the second switch 203a both will be ON during this period. L1 current will be increasing with same slope as in 0 to T/4 time period. But capacitor current slope will change and start discharging to L2, and L2 current will start to increase with the same slope of Icl but in a negative direction.

As shown, in such an embodiments, there are two changes in direction of current of Ic1. In this half period of operation, current is not decreasing much or increasing much, hence ripple current is reduced which is responsible for decreasing the area of Icl current.

Case3: T/2≤t≤3T/4

In this time period, the first switch 201a will be OFF and the second switch 203a will be ON. Hence the source is connected to C1, so C1 will be charged and Icl current will become positive, but Icl will decrease due to I(L2) also increasing.
During this period, Ic1= (I(L1) -I(L2)). At the end of this period, it will reach a min value but the drop is less than drop without utilizing the time delay operation.

Case4: 3T/4≤t≤T

The first switch 201a will turn ON and the second switch 203a will be OFF. In this time period operation will be the same as 0 to T/4 time period.

Utilizing one or more embodiments disclosed above, referring additionally to Figs. 5 and 6, in certain embodiments, the RMS current to the intermediate capacitor can be reduced by more than about 0% to about 16%. In certain embodiments, the RMS current to the intermediate capacitor is reduced by about 15%. In the embodiment shown, the RMS current of the intermediate capacitor is reduced from about 7.958A in a traditional system to about 6.68A, which is a decrement of about 16% by using a 50% time delay between two switches.

In accordance with at least one aspect of this disclosure, a controller (e.g., controller 107) for a cascaded converter (e.g., system 100) can be configured to control a first boost circuit and a second boost circuit of the cascaded converter to reduce an RMS current to an intermediate capacitor of the cascaded converter and/or an area under an intermediate capacitor current plot. The controller can be configured to operate a first switch of the cascaded converter and a second switch of the cascaded converter with a time delay relative to each other such that the first and second switches are operated off-phase from each other. The controller can be any suitable controller disclosed herein, e.g., as described above.

In accordance with at least one aspect of this disclosure, a method can include reducing an RMS current to an intermediate capacitor of a cascaded converter using by controlling a plurality of switches with a time delay relative to each other. In certain embodiments, the time delay can be about 50% of duty cycle, and each switch can include the same duty cycle. Reducing the RMS current can include reducing a minimum required size of the intermediate capacitor.

In traditional systems, the size of the intermediate capacitor (C1) is large to decouple two cascaded converters. The intermediate capacitor can store energy in one half cycle and discharge in other half cycle. The capacitor in traditional systems stores more energy during ON period. For storing more energy, a large value of capacitance ($E=1/2*C*V^2$) is required, hence size of capacitor will be bigger.

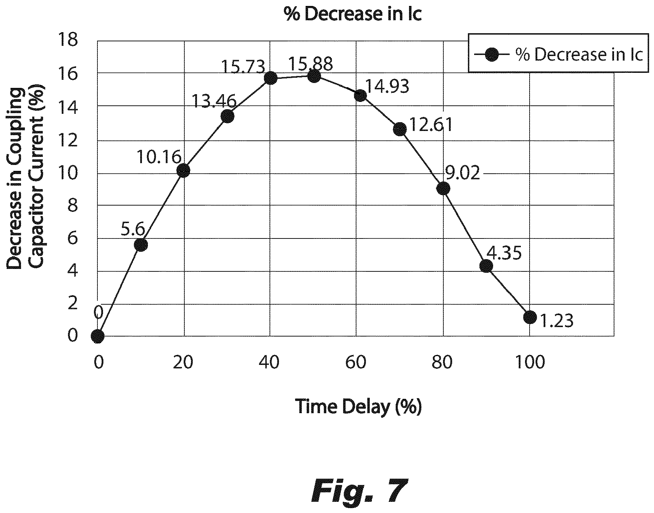

Referring to Fig. 7 and Table 2 below, a 50% time delay between switching of two boost converters can provide an optimal decrease (about 16% of RMS current) in capacitor current. Hence size of the intermediate DC link can be reduced proportionally. Table 2 indicates RMS current value and percent reduction thereof as a function of time delay percentage.

Table 2

| Time delay (% of D) | Ic (A) | % decrease in Ic |
|---|---|---|
| 0 | 7.9679 | 0 |
| 10 | 7.5205 | 5.615030309 |
| 20 | 7.158 | 10.1645352 |
| 30 | 6.8952 | 13.46276936 |
| 40 | 6.714 | 15,73689429 |
| 50 | 6.702 | 15.88749859 |
| 60 | 6.778 | 14.93367136 |
| 70 | 6.963 | 12.61185507 |

(continued)

| Time delay (% of D) | Ic (A) | % decrease in Ic |
|---|---|---|
| 80 | 7.2487 | 9.026217699 |
| 90 | 7.6208 | 4.35622937 |
| 100 | 8.066 | 1.23119015 |

It is contemplated that a control scheme/time delay providing a less than optimal decrease can be selected in certain embodiments. In certain embodiments, a maximum reduction in capacitor size can be realized if the duty cycle of the first converter is the same as the second converter.

In traditional systems, in the ON time period C1 is discharging and in OFF time C1 is storing energy through source. Hence max current Icl is much more and min current is much less because of charging and discharging for full period. Thus, area under the curve while charging is more than the area under the curve for discharging in traditional systems. Embodiments can reduce max rise in current and min fall in current, and thus the area under curve will be less by providing a time delay between both switches (The first switch 201a and The second switch 203a), and thus max current will be less and min fall in current will be more. Embodiments also have very little ripple current flowing through C1 and thus RMS current flow through C1 can be reduce. The energy stored also can also be less.

Embodiments provide a reduction in power losses and RMS current which reduces the required size for the intermediate capacitor. For a smaller size capacitor, ESR (Equivalent Series Resistor) of the capacitor also decreases. Thus the current and ESR reduction also decreases power losses across capacitor, the relationship of which can be shown mathematically.

$$\frac{\partial P}{P} = \frac{\partial r}{r} + 2 * \frac{\partial i}{i}$$

Where $\frac{\partial P}{P}$ is change in Power loss, $\frac{\partial r}{r}$ is change in ESR and $\frac{\partial i}{i}$ is change in current across capacitor

Embodiments can improve the life cycle of the intermediate capacitor as well. As Power loss is decreasing in capacitor, then temperature rise will also decrease. The smaller the temperature rise, the longer the life cycle of capacitor.

By increasing the number of electric motors, e.g., in hybrid electric propulsion that combine battery and combustion engines, either series or parallel architecture may become necessary for certain aircraft, for example. Embodiments can provide a lighter, and longer lasting DC link to drive through an inverter. Any other suitable use of any suitable embodiment and/or component(s) thereof is contemplated herein.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, microcode, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

**Claims**

1.  A cascaded converter system, comprising:

    a first boost circuit (101) configured to output a first voltage that is higher than an input voltage;
    a second boost circuit (103) configured to output a second voltage that is higher than the first voltage;
    an intermediate capacitor (105) disposed in parallel between the first boost circuit and the second boost circuit; and
    a controller (107) configured to control the first and second boost circuit to reduce an RMS current to the intermediate capacitor and/or an area under an intermediate capacitor current plot.

2.  The system of claim 1, wherein the first boost circuit includes a first switch operatively connected to the controller to be controlled by the controller, and the second boost circuit includes a second switch operatively connected to the controller to be controlled by the controller.

3.  The system of claim 2, wherein the controller is configured to operate the first switch and the second switch with a time delay relative to each other such that the first and second switches are operated off-phase from each other.

4.  The system of claim 3, wherein the controller is configured to operate the first switch and the second switch off-phase such that the time delay is more than about 0% and less than about 100% of duty cycle.

5.  The system of claim 4, wherein the controller is configured to operate the first switch and the second switch off-phase such that the time delay is between about 20% and about 80% of duty cycle, and preferably wherein the time delay is about 50% of duty cycle, and more preferably wherein the controller is configured to control a first duty cycle of the first boost circuit to be the same as a second duty cycle of the second boost circuit.

6.  The system of claim 1, wherein the RMS current to the intermediate capacitor is reduced by more than about 0% to about 16%; or
    wherein the RMS current to the intermediate capacitor is reduced by about 15%.

7.  A controller for a cascaded converter, wherein the controller is configured to control a switching of first boost circuit and a second boost circuit of the cascaded converter to reduce an RMS current to an intermediate capacitor of the cascaded converter and/or an area under an intermediate capacitor current plot.

8.  The controller of claim 7, wherein the controller is configured to operate a first switch of the cascaded converter and a second switch of the cascaded converter with a time delay relative to each other such that the first and second switches are operated off-phase from each other.

9.  The controller of claim 8, further configured to operate the first switch and the second switch off-phase such that the time delay is more than about 0% and less than about 100% of duty cycle.

10. The controller of claim 9, further configured to operate the first switch and the second switch off-phase such that the time delay is between about 20% and about 80% of duty cycle.

11. The controller of claim 9, wherein the time delay is about 50% of duty cycle, and preferably further configured to control a first duty cycle of the first boost circuit to be the same as a second duty cycle of the second boost circuit.

12. The controller of claim 7, wherein the RMS current to the intermediate capacitor is reduced by more than about 0% to about 16%.

13. The controller of claim 7, wherein the RMS current to the intermediate capacitor is reduced by about 15%.

14. A method, comprising:
    reducing an RMS current to an intermediate capacitor of a cascaded converter using by controlling a plurality of switches with a time delay relative to each other.

15. The method of claim 14, wherein the time delay is about 50% of duty cycle, wherein each switch includes the same duty cycle, and preferably wherein reducing the RMS current includes reducing a minimum required size of the intermediate capacitor.

100

Fig. 1

**Fig. 2**

*Fig. 3*

**Fig. 4**

EP 3 905 495 A1

**Fig. 5**

EP 3 905 495 A1

**Fig. 6**

EP 3 905 495 A1

**% Decrease in Ic**

Fig. 7

Europäisches
Patentamt

European
Patent Office

Office européen
des brevets

# EUROPEAN SEARCH REPORT

Application Number

EP 21 17 0701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUBER L ET AL: "A design approach for server power supplies for networking applications", APPLIED POWER ELECTRONICS CONFERENCE AND EXPOSITION, 2000.APEC 2000.FIFTEENTH ANNUAL IEEE, IEEE, vol. 2, 6 February 2000 (2000-02-06), pages 1163-1169, XP010371643, DOI: 10.1109/APEC.2000.822834 ISBN: 978-0-7803-5864-5 * page 1165, column 1; figures 5,7; table III * * page 68, column 1 * | 1-15 | INV. H02M1/00 H02M1/42 |
| X | CHEN ZHENGGE ET AL: "Variable Duty Cycle Control for Quadratic Boost PFC Converter", IEEE TRANSACTIONS ON INDUSTRIAL ELECTRONICS, IEEE SERVICE CENTER, PISCATAWAY, NJ, USA, vol. 63, no. 7, 1 July 2016 (2016-07-01), pages 4222-4232, XP011613544, ISSN: 0278-0046, DOI: 10.1109/TIE.2016.2532838 [retrieved on 2016-06-09] * Subsection IV.D "Comparison of RMS Currents Flowing Through Capacitors"; figures 2,13 * | 1,7,14 | |

TECHNICAL FIELDS SEARCHED (IPC)

H02M

-/--

The present search report has been drawn up for all claims

| Place of search | Date of completion of the search | Examiner |
|---|---|---|
| The Hague | 23 August 2021 | Kanelis, Konstantin |

Europäisches
Patentamt

European
Patent Office

Office européen
des brevets

# EUROPEAN SEARCH REPORT

Application Number

EP 21 17 0701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AN LE ET AL: "Analysis of DC Bus Capacitor Current Ripple Reduction in Basic DC/DC Cascaded Two-Stage Power Converters", IEEE TRANSACTIONS ON INDUSTRIAL ELECTRONICS, IEEE SERVICE CENTER, PISCATAWAY, NJ, USA, vol. 63, no. 12, 1 December 2016 (2016-12-01), pages 7467-7477, XP011633614, ISSN: 0278-0046, DOI: 10.1109/TIE.2016.2594162 [retrieved on 2016-11-08] * figures 2,6 * | 1-15 | |
| A | ALHARBI BADUR M ET AL: "An Efficient High Voltage Gain Using Two-Stage Cascaded Interleaved Boost Converter for Solar PV System with MPPT Technique", 2020 IEEE POWER & ENERGY SOCIETY INNOVATIVE SMART GRID TECHNOLOGIES CONFERENCE (ISGT), IEEE, 17 February 2020 (2020-02-17), pages 1-4, XP033768183, DOI: 10.1109/ISGT45199.2020.9087720 [retrieved on 2020-05-05] * Section IV. CONCLUSION; figures 3,7 * | 1-15 | |

TECHNICAL FIELDS
SEARCHED (IPC)

The present search report has been drawn up for all claims

| Place of search | Date of completion of the search | Examiner |
|---|---|---|
| The Hague | 23 August 2021 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)